# EUROPEAN PATENT APPLICATION

(11) **EP 4 582 404 A1**
(43) Date of publication of application: **09.07.2025**
(21) Application number: 24150588.2
(22) Date of filing: 05.01.2024
(51) Int. Cl.: C05C 9/00, A01N 25/12, A01N 25/28, C05D 9/00, C05F 11/02, C05G 5/12, C05G 5/30

(54) **UREA-CARBON COMPOSITE GRANULE WITH AT LEAST ONE LAYER OF CARBONIZED PARTICULATE MATERIAL, ITS PRODUCTION AND THE USE THEREOF**

(71) Applicant: Point2Hectare UG (haftungsbeschränkt), 14469 Potsdam (DE)
(72) Inventor: Dr. Mumme, Jan, 14469 Potsdam (DE)
(74) Representative: Braeuning Schubert Patentanwälte GbR

(57) **Abstract**

The object of the present invention is a urea-carbon composite granule with at least one defined layer of carbonized particulate material directly bound to a urea granule without the aid of any binding material or any binding layer between the urea and the carbonized particulate material.

A further object of the present invention is a method of manufacturing the urea-carbon composite granule according to the invention and a fertilizer comprising said urea-carbon composite granule according to the invention.

## Description

### Technical Field

The present invention relates to a urea-carbon composite granule with at least one defined layer of carbonized particulate material directly bound to a urea granule without the aid of any binding material or any binding layer between the urea and the carbonized particulate material. Furthermore, the present invention relates to a process for preparation of the urea-carbon composite granules and to fertilisers comprising the urea-carbon composite granules according to the invention.

### Background Art

The present invention relates to a urea-carbon composite granule. Urea is also known as carbamide. In the following text the term urea is used. Moreover the invention also includes the production of innovative urea-carbon composite granules and their use as a crop fertiliser.

Crop production requires the use of organic or mineral types of nitrogen fertilisers to meet the crops' nutrient requirements. A widely used mineral nitrogen fertiliser is urea which in its pure solid form has the highest nitrogen content of all fertilisers and is relatively easy and safe to handle. Before the urea nitrogen becomes well-available for plant uptake it has to undergo two chemical conversion steps in the soil. In the first step urea is converted into ammonia. Unless stated otherwise the term ammonia in this text referrers to both its unionized form (NH₃) and ionized form (NH4⁺, also termed ammonium). In the second step ammonia is converted into nitrate and in lesser amounts nitrite. While there is scientific evidence that plants can adsorb urea and use ammonia in their metabolism nitrate is the plants' preferred and most effective form of nitrogen supply. Under usual soil conditions step 1 takes 1-3 days and step 2 takes 1-3 weeks. Nitrate is a highly mobile molecule in the soil and it is prone to suffer leaching losses depending on soil and weather conditions whereas ammonia is less mobile and suffers lower leaching losses. However, urea itself is highly water-soluble and will wash out from the soil in case of significant rainfall after urea field spreading. Ammonia can also be affected by leaching losses and more importantly gaseous losses in its unionized form NH₃. To reduce operating costs farmers usually spread large amounts of urea fertiliser in one go rather than in smaller instalments. This, however, releases large amounts of nitrate at the same time that crops cannot take up completely and thus increases nitrogen losses further. Overall, globally the average nitrogen use efficiency of urea by crops is estimated at only 50 %. This means that 50 % of the globally produced and used urea is lost before it can be converted into plant biomass. This is not only a huge cost factor but also causes significant environmental pollution. Furthermore, it also contributes to climate change as production of urea requires large amounts of energy and it is also known that nitrogen fertilisers like urea create emission of nitrous oxide (N₂O) which is a very potent greenhouse gas.

To reduce the nitrogen losses of solid granular urea fertiliser, which is produced from molten urea by granulation or prilling, both chemical inhibitors and protective coatings are used. Inhibitors are divided in two groups namely urease inhibitors that inhibit the activity of the urease enzyme that converts urea into ammonia, and nitrification inhibitors that inhibit the biological oxidation of ammonia into nitrate. These synthetic inhibitors have shown to increase the fertiliser efficiency but issues and concerns surround their food safety and impact on the environment. For example, the nitrification inhibitor dicyandiamide was found as a residual contaminant in milk products and azoles, a chemical group also used as a nitrification inhibitor, have shown ecotoxic effects. The main urease inhibitor N-(n-butyl) thiophosphoric triamide (NBPT) was found to also inhibit plant uptake of urea and cause urea toxicity in plants.

A physical method of controlling the release of mobile nitrogen is to coat the urea granules with a less soluble material such as sulfur and biodegradable polymers. Disadvantages of sulfur coating is the non-uniformity and compactness whereas polymers have high costs.

A relatively new form of urea coating is the use of porous carbonized materials such as biochar or charcoal as coating materials. Research has shown that biochar-coated urea granules provide several agronomic benefits such as increased nitrogen use efficiency (Jia et al. Chem. Biol. Technol. Agric. 2021 8:3) and higher crop yields (Gamage et al. Plants 2022, 11, 75). Moreover, carbonized materials possess a high portion of carbon that remains stable in the soil for a century or longer. If made from biomass, the carbonized material can be used for long-term carbon removal and for the amendment of soil health by the usually high sorption capacity of carbonized materials for water and plant nutrients.

Various patent applications disclose different formulations of carbon-coated urea fertilisers and their production.

CN 105294363A, CN 106380314A, CN 104628482A, CN 101215191A describe different formulations of carbon-coated urea granules. That includes the use of a chemical binder such as starch and lignin to attach the porous carbon to the surface of the urea granule. The use of a binder, however, increases the production cost and reduces the nitrogen concentration and thus the nutrient value of the fertiliser. Moreover, binders at least temporarily shield the porous carbon from interacting with both the urea and the urea derivatives (e.g. ammonia, nitrate) as required to yield beneficial effects such as adsorption and catalyzed transformation and plant uptake of mobile nitrogen and, thus, prevention of nitrogen losses.

This is a huge disadvantage of the state of the art.

CN 108558529A discloses a membrane for coating urea granules that consists of charcoal, urea and acetate starch. However, the final coated urea granules will differ significantly from the urea-carbon composite granules according to the present invention. The mass ratio of charcoal in the coating of CN 108558529A is only 1 part to 9 to 12 parts of urea and acetate starch.

This is a further huge disadvantage of the state of the art.

### Summary of the invention

Therefore, it is the problem of the invention to overcome the disadvantages of the state of the art.

The problem of the invention is solved by providing a urea-carbon composite granule with at least one defined layer of carbonized particulate material directly bound to a urea granule without the aid of any binding material or any binding layer between the urea and the carbonized particulate material. The urea-carbon composite granules are characterized in that there is no added material to allow the stable attachment of the carbonized particulate material to the urea granule. As will be detailed in following description, the binding between the carbonized particulate material and the urea is accomplished by melting the urea core at the urea core surface where the attachment shall be performed.

In a preferred embodiment of the present invention a urea-carbon composite granule is provided, wherein the carbonized particulate material layer is embedded in the urea granule, equidistant or nearly equidistant to the geometric centre of the urea granule and thereby covering the carbonized particulate material layer with a urea layer. And here again the binding between the layer of carbonized particulate material and the urea matrix is accomplished by melting the urea matrix of the urea core in the area where the binding shall take place. No binding material or binding layer is necessary to provide this stable urea-carbon composite granule.

Preferably, the urea-carbon composite granule according to the invention has a diameter of 0.5 to 10 mm. This allows perfect handling and use of said granules.

Furthermore preferred is a urea-carbon composite granule according to the invention, wherein the layer of carbonized particulate material has a thickness of 1 to 25 % of the diameter of the urea-carbon composite granule. The thickness can be adapted as needed, but the urea-carbon composite granule with the layer of carbonized particulate material in the preferred thickness has shown to be especially useful.

It is particularly preferred that in case that the urea-carbon composite granule according to the invention has a urea layer covering the defined layer of carbonized particulate material, the thickness of said urea layer is at least 1 µm.

It is especially preferred that in the urea-carbon composite granule according to the invention the carbonized particulate material has a mass fraction of the total mass of the urea-carbon composite granule of 0.5 % to 25 %.

Additionally preferred is the urea-carbon composite granule according to the invention wherein the ratio between the average diameter of the carbonized particulate material and the diameter of the urea-carbon composite granule is less than 1:10. In a furthermore preferred embodiment of the urea-carbon composite granule according to the invention the ratio between the average diameter of the carbonized particulate material and the diameter of the urea-carbon composite granule is less than 1:30.

Additionally preferred is the urea-carbon composite granule according to the present invention wherein the concentration of carbonized particulate material in the layer of carbonized particulate material makes at least 50 % of the total mass of said layer of carbonized particulate material.

Furthermore preferred is the urea-carbon composite granule according to the present invention wherein the concentration of carbonized particulate material in the layer of carbonized particulate material makes at least 80 % of the total mass of said layer of carbonized particulate material.

In an especially preferred embodiment of the urea-carbon composite granule according to the present invention the concentration of carbonized particulate material in the layer of carbonized particulate material makes at least 95 % of the total mass of said layer of carbonized particulate material.

Preferred is a urea-carbon composite granule according to the invention wherein the carbonized particulate material is selected from charcoal, biochar, carbon black and graphite, and the mixtures thereof.

Additionally preferred is a urea-carbon composite granule according to the invention that contains an additional outer coating of a highly hydrophobic material and/or an urease enzyme. Thereby it is possible to further amend the characteristics of the urea-carbon composite granule as needed.

In a preferred embodiment of the urea-carbon composite granule according to the invention the hydrophobic material is lauric acid.

In a particularly preferred embodiment of the present invention the urea-carbon composite granule according to the invention contains two or more layers of carbonized particulate material and the innermost layer contains the carbonized particulate material with the highest porosity and the outermost layer contains the carbonized particulate material with the highest hydrophobicity, when comparing the characteristics of the layers of carbonized particulate material.

The terms "innermost" and "outermost" are used to denote the relative distance of the respective layers to the geometric centre of the urea-carbon composite granule according to the invention. Thus, the distance between the innermost layer and the geometric centre of the urea-carbon composite granule is smaller than the distance between the outermost layer and the geometric centre of the urea-carbon composite granule according to the invention.

Furthermore, the problem of the present invention is solved by providing a method for manufacturing a urea-carbon composite granule according to the invention successively performing the steps of a) providing granular urea and carbonized particulate material, b) spreading said carbonized particulate material on a surface carrier of high reflectance and heat conductivity, c) moving said granular urea on top of the carbonized particulate material, d) heating the mixture of said granular urea and said carbonized particulate material from the top and thereby heating said carbonized particulate material faster than said granular urea and said carrier until the temperature of the heated carbonized particulate material reaches between 133 °C and 180 °C, e) thereby initializing a heat transfer from the heated carbonized particulate material to the surface of the granular urea to cause temporary and locally limited melting of the granular urea and subsequent embedding of the carbonized particles, and d) optionally coating the prepared urea-carbon composite granule with one or more further coating materials.

In a preferred embodiment of the method according to the present invention infrared light or microwave rays are used for the selective heating and/or wherein the embedding process is conducted on a metal surface of high reflectance and heat conductivity.

And additionally, the problem of the present invention is solved by a fertilizer comprising the urea-carbon composite granules according to the invention. "Comprising" means in that context that further fertilizer components or other components can be present in the fertilizer. But is does not exclude that no further components beside the urea-carbon composite granule according to the invention.

The problem of the invention is furthermore solved by providing a fertilizer containing the urea-carbon composite granule according to the invention, without any further components.

And additionally, the problem of the present invention is solved by the use of a urea-carbon composite granule according to the invention as fertilizer.

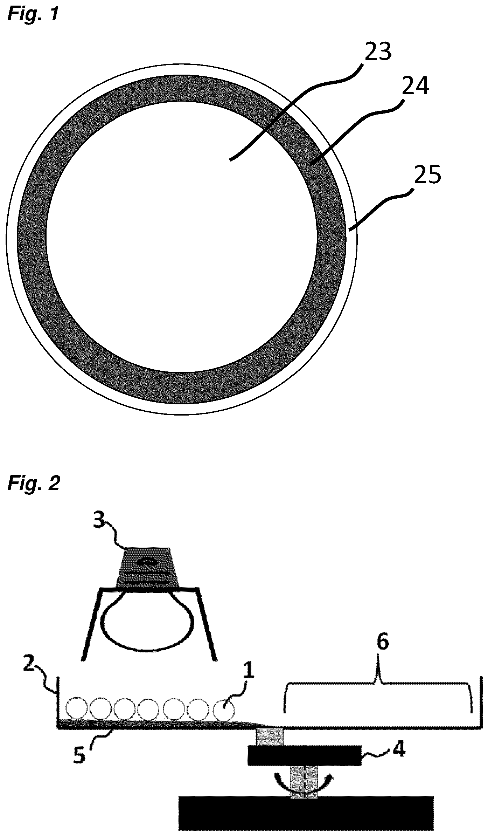

The present invention overcomes the disadvantages of the state of the art by providing a urea-carbon composite granule with a defined layer of carbonized particulate material that is bound by urea and without any binding layer and surrounds the core of the urea granule at equidistance. In a preferred embodiment of the present invention the layer of carbonized material is fully embedded in the urea phase of the granule. A schematic view of an embodiment of the urea-carbon composite granule according to the present invention is shown in Figure 1.

The present invention overcomes the disadvantages of the state of the art through attaching a particulate carbonized material in a defined layer without the use of any binding layer at the outer surface of an urea granule .

In a very preferred embodiment of the invention the disadvantages of the prior art are overcome by embedding a particulate carbonized material in a defined layer inside an urea granule. This means that in both embodiments no binder is required other than the urea itself.

Furthermore, compared to the state of the art, the present invention has a mass concentration of porous particulate carbon material in the layer of at least 50 %. This much lower dilution gives the invention a much higher nutrient value, carbon effectiveness and allows lower production costs.

The inventor discovered that carbonized particulate materials such as biochar, charcoal or graphite can be introduced into the urea granule to form a distinct layer that in a preferred embodiment is completely embedded in the urea matrix. This is achieved by an innovative process of selective heating where undesired melting and decomposition of urea into ammonia was found to be neglectable.

The carbonized particulate material in the urea-carbon composite granule according to the invention has an elemental carbon content of at least 60 % of its total ash-free mass.

All embodiments of urea-carbon composite granules according to the invention have in common that for the binding between urea and carbonized particulate material no further binding agent or binding material is necessary. With the method according to the invention urea-carbon composite granules can be prepared with different outer layers of the main components, namely urea or carbonized particulate material, as needed. The advantages of preferred embodiments are illustrated in detail in the following.

The surprising effect can be used to produce novel composite urea granules where the carbonized particulate material controls the release of nitrogen from the urea. When used as a fertiliser a controlled release of nitrogen can reduce the loss of nitrogen through leaching of ammonia, nitrate, nitrite, and gas emissions of nitrous oxide (N₂O) and unionized ammonia (NH₃).

In contrast to the present invention, CN 105294363A, CN 106380314A, CN 104628482A, CN 101215191A and CN 108558529A describe urea-carbon composite fertiliser formulations where the carbonized material is part of a complex coating material that contains one or more binders other than urea and is applied on the outer surface of the urea granule. Disadvantage of these coating formulations are at least temporary shielding of the particulate carbon surface from interacting with the urea and urea derivatives (e.g. ammonia, nitrate), higher production costs and a significant dilution of the effective components of the composite fertiliser i.e. nitrogen and functional carbon. The present invention does not use any binder other than the urea itself. This enables the production of urea-carbon fertiliser composite granules with a higher concentration of nitrogen and functional carbon and, thus, a higher agronomic value.

Moreover, the invention allows providing urea-carbon composite granules with a shell of carbonized particulate material around a urea core. In a preferred embodiment of the present invention the invention allows to the production of urea-carbon composite granules with a shell of urea that protects the layer of carbonized particulate material against mechanic stress (abrasion) and the shell can be made with a distinct thickness to act as readily available (unprotected) urea. In this way, the carbonized particulate material shields the inner core urea for later nitrogen release. This compartmentation of the urea helps to achieve a uniform supply of nitrogen to crops and to reduce nitrogen losses.

The carbonized particulate material can be loaded with additional beneficial substances to increase the fertiliser value and to control the nitrogen release from the urea granule such as plant nutrients and plant biostimulants, chemicals that inhibit the urease activity or nitrification process or enzymes like urease that speed up the breakdown of urea. For additional functionality the outer shell of the composite material can be coated with hydrophobic substances like lauric acid or a wax that further prolong the release of nitrogen, a urease enzyme to speed up the conversion of urea into ammonia or a combination of urease and a hydrophobic substance.

### Brief Description of Drawings

The FIGURES show:
FIG. 1 - a schematic composition of a urea-carbon composite granule showing the embedded layer of carbonized particulate material according to a preferred embodiment of the present invention;
FIG. 2 - a sectorial side view of an example of the design of an embedding device;
FIG. 3 - a top view of an example of the design of an embedding device;
FIG. 4 - the sectoral side view at the end of the embedding process where the urea granules have been converted into urea-carbon composite granules;
FIG. 5 - an example of the process cascade required to embed carbonized particulate material into urea granules;
FIG. 6 - a schematic view of an integrated process.

### Description of preferred embodiments

### Production of the urea-carbon composite granules according to the invention

The urea-carbon composite granule of the present invention can be produced with a broad range of carbonized materials. Preferably a type of biomass such as wood or straw is used to produce the carbonized material but also various organic wastes like sewage sludge, paper waste slurry, green cuttings, food waste, food processing waste and animal manures can be used. Carbonization can be performed by pyrolysis, gasification, torrefaction and hydrothermal carbonization. To obtain a hydrophobic type of carbonized material pyrolysis at temperatures of 300 °C to 400 °C and hydrothermal carbonization at temperatures of 150 °C to 280°C are most suitable. The mass fraction of elemental carbon of the ash-free total mass of the carbonized material should generally exceed 70 %, for materials obtained by hydrothermal carbonization at least 60 %.

Before the carbonized particulate material is combined with urea granules the carbonized material should be milled to a particle size below 0.2 mm and ideally to below 0.05 mm for complete and even introduction into the urea granule.

All types of solid granular urea qualify for modification with at least one attached or embedded layer of carbonized particles to the urea core. This includes urea prills made by prilling which usually have a diameter of 1-2.4 mm and urea granules made by granulation which usually have a diameter of 2-4 mm. For simplicity, in this text the terms 'granular' and 'granule' also refer to urea prills. Normally pure urea with a nitrogen content of around 46 % will be used for the production of the urea-carbon composite granules according to the invention. However, also granular urea with added chemicals such as inhibitors can be used. For a uniform concentration of embedded carbonized particles the urea granules should be size classified before the embedding process for example in a range of 1-2 mm, 2-3 mm, 3-4 mm and 4-5 mm.

The critical step of the preparation process is a selective heating of the urea where only a small part of the outer zone of the urea granules becomes molten and only for a short time to just allow the attachment or introduction of the carbon particles. Otherwise, if heat is not applied correctly a complete melting of the urea and loss of the granular shape would be the consequence. In addition, melting can cause smearing of the embedding apparatus and decomposition of urea into potentially toxic ammonia.

The inventor was surprised to find that the required selective heating can be conducted by using the carbonized particles for the heat transfer. The carbonized particles are spread on a metal surface carrier of high reflectance and heat conductivity like aluminium while the urea granules are moved on top in a circular or oscillating pattern by mechanic or acoustic means. The mixture of loose carbonized particles and urea granules is subjected to infrared light from the top. Due to their dark nature the carbonized particle heat up quickly while the white urea granules and reflective metal carrier heat up by lower extent. When rolling above a heated carbon particle the heat of the particle transfers to the surface of the urea granules. The urea starts melting at temperatures above 133 °C. It was found that a surface temperature of the carbonized particles of 150-180 °C is suitable for a quick and reliable embedding process. The carbonized particles should be spread uniformly on about 50 % of the surface area of the carrier surface in an amount of 5 to 250 mg/cm². To allow for sufficient heating of the carbon particles the surface of the carrier should not be covered by more than 50 % by urea granules. When the urea granule becomes enriched with dark carbon particles it will also absorb more infrared light. This warming effect is counterbalanced by the transfer of heat to the metal surface of the carrier when the granule rolls over a blank part of the carrier. Changing the light intensity, speed of the rolling movement and duration of the process can be used to alter the depth of the layer of carbonized particulate material.

A higher light intensity, slower movement and longer process increases the depth of the layer. Continuation of the rolling movement of the granules over loose particles of carbonized material after the heat source has been switched off or dimmed can be used to finish the layer of carbonized particulate material with an outer surface that is not covered by urea. This method uses the residual surface heat of the granule's surface with still molten or soft urea on the outside to pick up additional carbonized material particles from the carrier without melting more urea from the core of the granule which stops the embedding process. To produce the preferred embodiment of the composite granule with fully embedded carbonized material the rolling and heating continuous for a short while after the carbonized material particles have been consumed or removed from the carrier surface and stops when the desired strength of the layer of urea has been achieved.

The amount of carbon particles added to the carrier and process time controls the concentration of carbonized material of the urea-carbon granule. Usually the carbonized particulate material will make 1-25 % of the final weight of the composite granule, which will normally take 1 to 5 minutes to achieve.

To produce urea-composite granules according to the invention with more than one layer of embedded carbonized particulate material or with a particularly thick outer layer of urea additional urea can be added to the embedding process. In a preferred embodiment of the method according to the invention the additional urea is added as a fine powder on the carrier after the carbonized material particles have been consumed or removed. This ensures that the heated surface of the granules takes up and incorporates only new urea and not any further carbonized material particles. After the urea layer has been completed an additional layer of carbonized materials can be added by introduction of new carbonized material particles to the process.

The embedding process can be designed as a batch, continuous or semi-continuous process. Composite granules that did not reach the desired amount of carbon addition can be separated and returned to the process e.g. by size or weight classification. The carbon particles increase the size of the granule and reduce its specific density.

Alternatively to infrared light the carbon particles can also be heated selectively by microwaves using the fact that urea is only mildly affected by microwaves in contrast to carbonized materials.

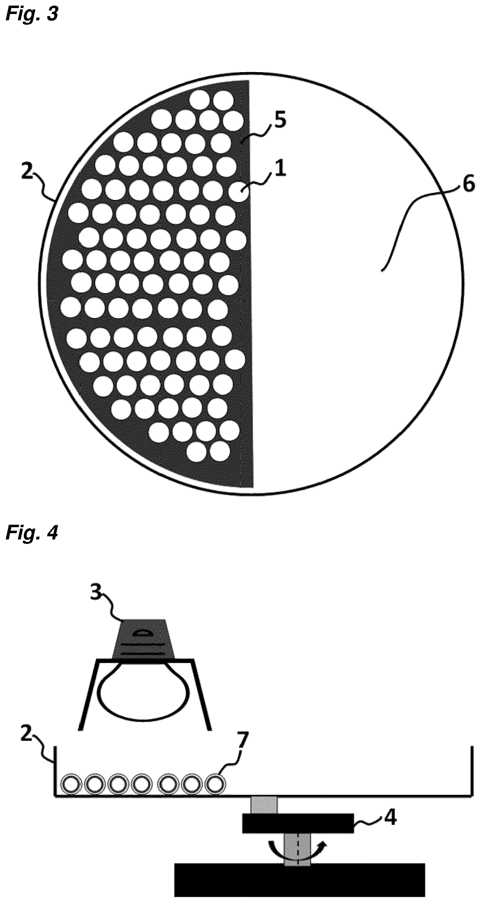

Figures 2-4 show a schematic example of the design of the embedding device. The sectorial side view of Figure 2 and top view of Figure 3 show the status at the beginning of the embedding process where a metal dish 2 has been loaded with a layer of powdered carbonized material 5 and fresh urea granules 1. A portion of the surface of the dish has been left blank 6. The metal dish is fixed on a rotatory shaker 4. An infrared light source 3 is installed above the portion of the dish that contains the carbonized material. Figure 4 shows the sectoral side view at the end of the embedding process where the urea granules have been converted into urea-carbon composite granules 7.

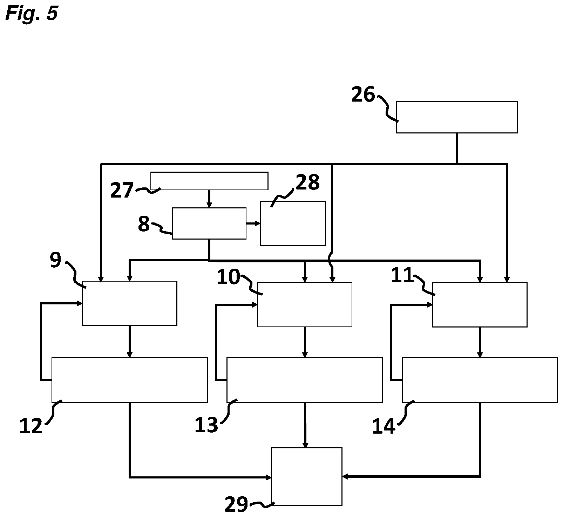

Figure 5 shows an example of the process cascade required to embed carbonized particulate material into urea granules. The urea granules are first size classified 8 into three different size classes large, medium and small size. Off-size granules that are too small or overly large are removed from the process. The classified urea granules are then delivered to the appropriate embedding process for large size granules 9, medium size granules 10 and small size granules 11. The embedding process can be carried out by the embedding device shown in Figures 2-4. After the embedding process the urea-carbon composite granules are analysed (e.g. by optical means) for the content of carbonized materials in a separate step individually for each granule size class 12-14. Granules that contain less carbon material than desired are returned back to the embedding process. Urea-carbon composite granules that meet the requirement leave the process for follow-up treatments such as additional coating and bagging.

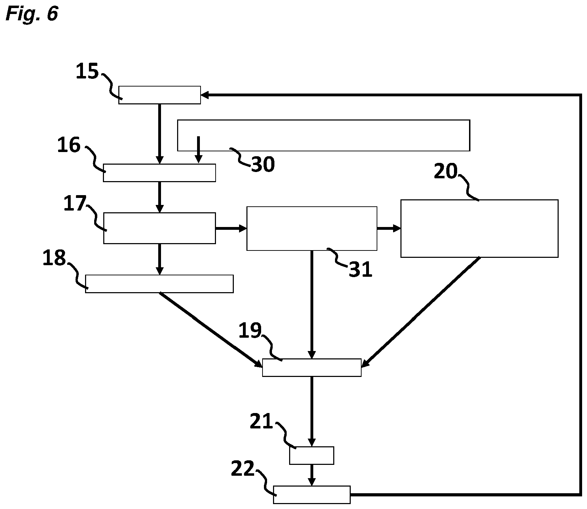

In a particularly beneficial setup the production of carbonized material, the urea production process and the embedding process are designed as an integrated process (see Figure 6). The biomass used for carbonization is either a straw residue from crop production 15 or an alternative feedstock such as wood, wood waste, sewage sludge, paper waste, food waste or food processing waste. Usually the carbonization process requires the use of dry biomass and a specific biomass particle size that is normally below 6cm. Most crude biomass feedstocks will require at least one according pre-treatment 16 such as drying, shredding, milling, pelleting or briquetting to be suitable for carbonization.

The carbonization process of biomass 17 also yields renewable energy that can be used in the urea production process 20 and the embedding process 19. The energy can be recovered as syngas which is a gas mixture that contains CO and H₂ and is produced by the carbonization processes pyrolysis and gasification. The H₂ can be purified and used directly in the Haber-Bosch-process. Alternatively, the whole syngas can be used to produce H₂ by using established technologies. Further alternatives are to convert the syngas into heat, steam or electricity by common technologies and to use the heat, electricity and steam in the urea production process.

The carbonization process also releases some CO₂ from the biomass that can also be used in urea production to convert ammonia into urea. This is especially beneficial if the urea production plant does not have an integrated Haber-Bosch ammonia production process or uses a non-carbon based source of energy such as hydrogen. In both cases, this means that no other CO₂ is produced on the site. As the CO₂ released from carbonization of biomass is carbon neutral it also reduced the carbon footprint of the urea product.

Before the carbonized material can be used in the urea embedding process 19 it is milled to below 0.2 mm 18. The embedding process of carbonized material into urea-carbon composite granules (including prills) is carried out as described before. The urea-carbon-composite granules may be subjected to additional coating before they are then bagged for storage and transport 21 usually into flexible intermediate bulk containers (FIBC). Finally, the urea-carbon composite granules are applied as a fertiliser to the soil 22 by standard fertiliser spreading machinery or soil injection machinery. After soil application the urea-carbon composite granules will start to release plant-available nitrogen in from of ammonia and nitrate to support crop growth while the carbonized material will remain in the soil and act beneficially by adsorbing nitrogen and protecting nitrogen from losses by leaching and gas emission. An advantageous circular process option is to use the urea-carbon composite fertiliser in the same crop production 15 that is used to produce the straw required for the composite fertiliser.

An alternative process to embed carbon particles into urea granules is to integrate carbon embedding into the production of urea granules or prills in a fluidized bed process. This can be achieved by phased addition of molten urea and carbon dust into the fluidized bed process.

### Use of urea-carbon composite granule

The main use of the novel urea-carbon composite granule is to supply plants and crops with nitrogen. The urea-carbon composite granules can be spread with conventional fertiliser spreading technology. Due to the reduced density and increased size the spreading behaviour will differ from conventional urea granules. However, fertiliser spreaders can normally be adjusted easily to different densities and sizes of fertiliser products.

When growing maize crops the inventor found it particularly beneficial to apply the urea-carbon composite granule as underfoot fertilization where the granule is applied in the soil under the maize seed and with an horizontal offset. This allows a quick uptake of released nitrogen by the plant roots from the soil matrix or the carbonized particles. The position and dosage of the composite fertiliser granule should follow the established standards for underfoot fertilization of maize e.g. 5 cm under the seed at 5 cm horizontal offset and a nitrogen dosage of 30-40 kg/ha.

### Examples and test results

Table 1 shows production characteristics and Table 2 shows the material characteristics of 6 carbonized materials (CM) that were produced by pyrolysis and can be used to produce the urea-carbon composite granules according to the invention and were found to have beneficial effects on the fertiliser behaviour. The materials CM2-CM6 were produced in a muffle furnace. CM1 is a commercial biochar product that was obtained from the producer. All materials were milled and sieved manually to a particle size below 0.2 mm.

**Table 1: Production characteristics of carbonized materials that can be used to produce the urea-carbon composite granules according to the invention and were found to have beneficial effects.**

| **Carbonized material** | **Feedstock** | **Pyrolysis temperature** | **Post-treatment** |
|---|---|---|---|
| CM1 | Hard wood | 800°C | milled to <0.2mm |
| CM2 | Wheat straw, loose | 300°C | milled to <0.2mm |
| CM3 | Wheat straw, loose | 400°C | milled to <0.2mm |
| CM4 | Wheat straw, loose | 500°C | milled to <0.2mm |
| CM5 | Wheat straw, loose | 700°C | milled to <0.2mm |
| CM6 | Wheat straw, pelleted | 500°C | milled to <0.2mm |

In addition also fine powdered graphite can be used for the coating and was also found to have useful effects. For testing purposes a commercial fine powdered graphite product was used.

A higher pyrolysis temperature generally results in a carbonized material with a higher carbon content and higher porosity and thus a higher adsorption capacity for chemical substances including urea, ammonia and nitrate. As shown in Table 3 a lower pyrolysis temperature produces carbon particles with a higher hydrophobicity which can help shield the urea from early water contact in the soil.

Generally, a particle size of the carbonized material below 0.2 mm is recommended to achieve a fast incorporation into the urea granule and a uniform distribution inside and a smooth surface of the granule.

Table 2 (see attachment) shows measurement values for the CM's and graphite's bulk density, leachate pH and electric conductivity, the moisture and ash content as well as elemental nitrogen, sulfur and carbon. The moisture and ash content were determined gravimetrically by drying at a temperature at 105 °C and ashing at 900 °C respectively. The elemental composition was determined by elemental analysis and was limited to three materials CM1, CM4 and CM6. The bulk density was measured by filling a 50mL falcon tube with 12 to 16 mL of each material milled to below 0.2 mm while applying gentle compaction at a pressure of 0.25 kg/cm². Afterwards the weight was determined to calculate the bulk density. To measure the pH and electrical conductivity (EC) of the soluble fraction of the carbon materials a leachate was produced from all materials. 1 g of material and 40 mL of deionized water was filled into a 50 mL falcon tube and shaken for 5 min. Afterwards the suspension was left settling for 60 min. The pH and EC were both measured by a combination probe that was inserted directly into the top clear part of the leachate liquor. All tested carbonized materials were found with no or only little moisture below 1.4 %. A moisture content of <10 % is recommended for the embedding process to achieve a quick heat-up of the carbon particles and avoid unwanted physical and chemical processes such as excessive melting or decomposition of the urea. The ash content showed a high variation. In general, a carbonized material has a higher ash content if its feedstock already has a high ash content. The ash content which is mostly involatile also increases at higher pyrolysis temperatures due to a higher decomposition of the volatile organic matter. This in principally is shown for the tested materials of Table 2. While a higher ash content decreases the content of carbon, porosity and surface area and consequently also the ability of the carbonized material to adsorb nitrogen the ash usually contains substantial concentrations of minerals that are also plant nutrients such as phosphorous, potassium, magnesium and calcium. This means that the ash content also has a fertiliser value. However, to be suitable for the use in urea amendment the carbonized material should not have an ash content above 50 %.

To qualify for the use in urea-carbon composite granule production the ash-free matter of the carbonized material should be mostly composed of elemental carbon and at least 70 % for CM's produced by dry-state thermal carbonization processes such as pyrolysis and gasification and at least 60 % for wet-state carbonization processes such as hydrothermal carbonization. A lower carbon content of the ash-free matter indicates insufficient carbonization and lack of porosity, adsorption capacity and chemical and biological stability in the soil.

Carbonized materials with a low bulk density such as carbonized straw may offer a higher efficiency in protecting the urea from nitrogen losses through a higher shielding and adsorptive surface area. The pH of the leachate of the CM is relevant for several nitrogen conversion processes and chemical processes in general. An alkaline pH may increase gaseous losses of ammonia by shifting the balance of NH₃ and NH₄⁺ towards NH₃. As seen in Table 2 a lower pH can be obtained from the same biomass by using a lower carbonization temperature. Alkaline biochars like those made from straw can also be washed prior to the embedding process with water or acid solutions like citric acid to reduce the amount of liming substance such as magnesium and calcium compounds and to achieve a neutral pH. On the other hand, lime can also be beneficial for soils and plants, which means that some applications may see benefits from having an alkaline carbonized material embedded in the composite fertiliser granule.

The leachate's EC is a measure of the CM's soluble salt content. This includes plant nutrients like potassium (K). However, carbonized materials with a very high EC might interfere with the uptake of water and nutrients of plant roots. Again, a possible solution to reduce the concentration of soluble salts of the CM is to wash the material prior to its use in the embedding process.

Table 2 (see attachments) shows material characteristics of carbonized materials and graphite that can be used to produce the urea-carbon composite granules according to the invention. Measured properties are bulk density, pH and electric conductivity of leachate water (EC), and content of moisture and elemental nitrogen, sulfur and carbon.

Table 3 shows the measurement values of the hydrophobicity indicators water drop penetration time and water drop contact angle for the tested carbonized materials.

The parameters were investigated by means of a 4 mm thick even layer of the particulate CMs and application of a 9.5 µL drop of deionized water. The contact angle was measured by a digital microscope. Materials that were found to be significantly hydrophobic were CM1, CM2 and graphite. These can be used to produce composite granules that are more protected against urea leaching losses by rainfall and soil water.

**Table 3: Hydrophobicity of carbonized materials measured by water drop penetration time and water drop angle.**

| **Carbonized material** | **water drop penetration time** | **contact angle** |
|---|---|---|
| | seconds | degrees |
| CM1 | 3700 | 130 |
| CM2 | >7000 | 139 |
| CM3 | 56 | |
| CM4 | 1 | |
| CM5 | <0.2 | |
| CM6 | <0.2 | |
| graphite | >3700 | 135 |

Table 4 shows the characteristics of urea-carbon composite granules produced from prilled urea granules in the size range of 2-3 mm and the carbonized materials of Table 2. The embedding process was carried out with a setup similarly to the device shown in Figures 2-4. The carrier tray was made of aluminium foil and had a rectangular shape with a bottom surface of 27 cm x 17 cm and a wall of 5 cm. A 250 Watt infrared light bulb was positioned approximately 8 cm above the bottom of the aluminium tray.

The tray way filled with the desired amount of carbonized particulate material with a particle size <0.2 cm and urea granules in an amount of 1-2 g per batch. Rotary shacking of the tray at a speed of about 100 turns per minute was done manually. Typically the total duration of the embedding process was 1-5 min. The process was paused 2-5 times to determine the concentration of embedded carbon material by weighing the composite granules and the process was finished when the desired concentration was reached. Subsequently, the final composite granules where further analysed for their physical properties. The concentration of carbonized material and the urea nitrogen concentration was determined by the weight gain of the total batch of urea granules. The concentration of carbonized material ranged between 1.4 % and 25 % and the nitrogen content between 34 % to 46 %. Because of the lower material density the amount of added straw-derived carbonized material was generally lower than added wood-derived carbon and graphite.

To determine the specific weight, diameter and density a selection of 5-10 granules were subjected to further analysis. The specific weight was determined with a laboratory balance and the diameter with a digital microscope. The density was then determined mathematically. As expected, the urea-carbon composite granules were found to have a larger diameter and lower density than the pure urea granule. Most of the composite granules were also shown to have gained substantial weight. A few samples were apparently found to have gained no or little weight which can be attributed to property variations of the starting batches of urea pearls and the limited sample amount. On average, a composite granule weighted 9.00mg which is 11 % higher than the original pure urea granules, had a diameter of 2.64 mm which is 14 % higher than the original urea granules, and had a density of 0.94 g/cm³ which is 25 % lower than the original urea granules.

Table 4 (see attachment) shows characteristics of carbon-urea composite granules.

Table 5 shows the characteristics of five urea-carbon composite granules with an additional coating. Four different base composite granules were selected for additional coating by powdered lauric acid. The lauric acid was obtained from a commercial supplier in food grade quality in a purity of >98 %.

The coating process was carried out under the same infrared lamp that was used for the embedding process but with a smaller sized aluminium tray, a circular tray with a diameter of 6cm, and in a larger distance between lamp and tray of approx. 20 cm. The desired amount of lauric acid (usually about 100 mg per batch) was added to the tray followed by 0.18-0.27 g of urea-carbon composite granules. The tray with the mixture was manually shaken in a circular pattern under the heat lamp until the lauric acid became molten and coated the granules. This took usually 2-5 minutes during which the granules reached a surface temperature of 50-60 °C. Afterwards the tray with the batch was removed from the heat lamp while the shaking continued for 5 min to solidify the coating. Subsequently, the coated urea-carbon composite granules were subjected to further analysis. The composition and physical properties where determined the same way as for the uncoated granules. The measured weight of the coating ranged from 11 % to 15 % of the final weight of the lauric acid coated granule. As expected, coating generally increased the weight and size of the granules. No clear trend was found regarding a possible change of the specific density.

To test if the addition of urease enzyme to the coating accelerates the hydrolysis of urea and, thus, could be used to accelerate the hydrolysis on purpose an additional coating was carried out accordingly. The urea-carbon composite granule CG8 was selected for this. The urea-carbon composite granule was first amended with a loose coating of urease using the same method as described for lauric acid but without the use of any heat source. Afterwards the second coating with lauric acid was applied to the urea-carbon composite granule to immobilise the urease. This was done according to the previously described method for coating of pure lauric acid. The weight gain after each coating step represents a concentration of urease of 6 % and lauric acid of 29 % of the total final weight of the coated granule. The urease enzyme used for this test is the same that was used for the accelerated enzymatic hydrolysis which is described later in the text and also provides further information on the urease material.

Table 5 (see attachment) shows characteristics of carbon-urea composite granules with additional coating.

Table 6 shows the leaching loss by simulated rainfall of urea from urea-carbon composite granules and pure urea granules with a diameter of 2mm to 3mm as a control. The test was conducted in 50mL Falcon tubes, one tube for each composite material. The tubes had a hole in the bottom and were each filled with 15 mL of dry gravel (height of 37 mm above the bottom) in a particle size of 2.0-3.5 mm. The composite granules in an amount of about 60 mg (6 to 9 granules) were positioned on the surface of the gravel matrix and wetted equally with deionized water. The water was applied with a pipette in five steps of 10 mL (start), 5 mL (5 min after start), 5 mL (180 min after start), 5 mL (34 hours after start), 5 mL (46 hours after start).

The five steps of water addition represent a total water addition of 30 mL and a precipitation height of 52 mm. The leachate from each step was collected and afterwards dried at 105 °C to determine the concentration of solids which were assumed to represent the leached urea.

**Table 6: Leaching loss of urea by simulated rainfall applied in five steps.**

| Material | **Urea leaching loss (% of intial urea)** | | | | | |
|---|---|---|---|---|---|---|
| | **Step 1** | **Step 2** | **Step 3** | **Step 4** | **Step 5** | **Total** |
| CG1 | 0.0 | 60.9 | 3.7 | 0.0 | 0.0 | 64.6 |
| CG2 | 0.0 | 24.0 | 3.7 | 0.0 | 0.0 | 27.7 |
| CG4 | 0.0 | 27.7 | 9.2 | 0.0 | 0.0 | 36.9 |
| CG5 | 1.8 | 16.6 | 3.7 | 0.0 | 0.0 | 22.2 |
| CG6 | 1.8 | 29.5 | 0.0 | 0.0 | 0.0 | 31.4 |
| CG7 | 3.7 | 40.6 | 5.5 | 0.0 | 0.0 | 49.9 |
| CG8 | 0.0 | 18.5 | 1.8 | 0.0 | 0.0 | 20.3 |
| CG9 | 9.2 | 3.7 | 5.5 | 0.0 | 0.0 | 18.5 |
| CG10 | 1.8 | 24.0 | 0.0 | 0.0 | 0.0 | 25.9 |
| CG11 | 11.1 | 33.2 | 0.0 | 0.0 | 0.0 | 44.3 |
| CG12 | 1.8 | 42.5 | 1.8 | 0.0 | 0.0 | 46.2 |
| CG13 | 5.5 | 66.5 | 1.8 | 0.0 | 0.0 | 73.9 |
| CCG1 | 3.7 | 0.0 | 7.4 | 22.2 | 3.7 | 36.9 |
| CCG2 | 11.1 | 1.8 | 5.5 | 35.1 | 1.8 | 55.4 |
| CCG3 | 1.8 | 5.5 | 22.2 | 16.6 | 0.0 | 46.2 |
| CCG4 | 1.8 | 5.5 | 27.7 | 9.2 | 3.7 | 72.0 |
| | | | | | | |
| Urea (Control) | 3.7 | 68.3 | 0.0 | 0.0 | 0.0 | 72.0 |

The total leaching loss of pure urea granules was 72 % which was already reached after Stage 2 of water addition. A similarly high loss rate was found for urea-carbon composite granule CG13 which contained 7.2 % graphite. In contrast CG12 that contained 24.3 % graphite only showed 46.2 % loss of urea. For the carbonized material obtained from straw and wood pyrolysis it was found that a higher concentration of carbonized material reduced the total urea loss. The pyrolysis temperature appeared to have no clear effect on the urea loss. The use of pelleted straw instead of loose straw for the production of the carbonized material showed to reduce the composite granule's ability to shield the urea. This can be explained by the higher density of pelleted straw and consequently a higher density of the carbonized material which means a lower surface area and thus a lower shielding effect. The same effect can be observed for the use of wood-derived carbonized material which also has a higher density than carbonized loose straw. This means that loose straw offers an option to reduce the amount of carbonized materials needed to achieve the desired shielding effect. All tested coated composite granules CCG1-4 showed a delayed leaching of urea which was expected from the hydrophobic lauric acid coating. The total urea loss after 52 mm of precipitation and 46 hours of exposure time however, reached a carbon loss that was higher than that of the uncoated version of the urea-carbon composite granule. This can be explained by coverage of the surface of the carbonized material by the lauric acid and thus a lower ability to physically retain the urea.

Table 7 shows the leaching losses of ammoniacal nitrogen from the urea-carbon composite granules and pure urea granules with a size of 2-3 mm as a control by simulated rainfall and accelerated enzymatic hydrolysis of urea into ammonia measured by a column test similarly to the one for urea leaching. The test was conducted in 50 mL Falcon tubes, one tube for each composite material. The falcon tubes had a hole in the bottom and filled with layers of 7.5 mL of dry gravel in a particle size of 2.0-3.5 mm (height from bottom of falcon tube to surface of layer: 23 mm), 7.5 mL of dry sand in a particle size of 0-1 mm (height from bottom of falcon tube to surface of layer: 37 mm), the urea-carbon composite granule material each in an amount of each about 60 mg (equals 5 to 9 granules), and a top layer of 3.5 mL of dry sand in a particle size of 0-1 mm (height from bottom of falcon tube to surface of layer: 49 mm).

To accelerate the hydrolysis of urea 5 mL of a urease solution with a urease concentration of 10 g/L was added to each filled falcon tube by a pipette from the top. The lab analytical grade urease was obtained in powdered form from the company Carl Roth. The urease was made from Jack beans with a specific activity of hydrolysing 1 µmol urea per minute at 25 °C and pH 8.0. No leaching was observed after addition of the urease solution. After waiting 120 minutes each falcon tube was given 10 mL of deionized water which was applied by a pipette from the top. The addition of 5 mL urease solution and 10 mL of water represent a precipitation height of 9 mm and 17mm, respectively.

The leachate from each tube was collected and afterwards quantified and analysed for the concentration of ammonia (NH₃ and NH₄⁺) by means of commercial water test strips. If required the leachate was diluted with deionized water to reach an ammonia concentration within the measuring range of the test strips. The found ammonia concentration and amount of leachate was used to calculate the total loss of ammoniacal nitrogen in percent of the total urea nitrogen applied.

**Table 7: Loss of ammoniacal nitrogen by simulated rain fall and accelerated enzymatic hydrolysis of urea.**

| Material | **Ammonium nitrogen leaching loss** |
|---|---|
| | **(% urea nitrogen)** |
| CG1 | 3.3 |
| CG2 | 1.9 |
| CG4 | 1.6 |
| CG5 | 1.7 |
| CG6 | 1.6 |
| CG7 | 1.6 |
| CG8 | 1.7 |
| CG9 | 1.6 |
| CG10 | 3.5 |
| CG11 | 3.2 |
| CG12 | 2.0 |
| CG13 | 1.8 |
| CCG1 | 2.0 |
| CCG2 | 1.9 |
| CCG3 | 1.8 |
| CCG4 | 1.9 |
| | |
| Urea (Control) | 19.1 |

The loss of nitrogen via leaching of ammonia was 19.1 % for pure urea granules and 1.6-3.5 % for composite granules. The significant reduction in nitrogen loss can be explained by a combination of different effects including physical shielding and ammonia adsorption by the embedded carbonized material. In addition the carbonized material may also inactivate parts of the urease by adsorption or various inhibitory mechanisms. One likely inhibitory effect of some carbonized materials is their high pH (see Table 2) that exceeds the pH optimum of the used urease of 7.4. Table 8 shows the loss of ammoniacal nitrogen for the urea-carbon composite product that was coated with urease and lauric acid (CCG5) and for the pure urea control and for comparison purposes the uncoated version of the composite granule (CG8). The method was identical to the leachate test with the urease solution but instead of urease solution only deionized water was used.

**Table 8: Loss of ammoniacal nitrogen from a urea-carbon composite granule that was coated with urease and lauric acid (CCG5), pure urea control and the uncoated carbon composite CG8 for comparison purposes.**

| **Tested material** | **Ammonium-N leaching loss** |
|---|---|
| | % urea-N |
| Urea (Control) | 0.0 |
| CG8 (uncoated version of CCG5 without urease for comparison) | 0.0 |
| CCG5 | 2.8 |

The leachate of CCG5 had a substantial concentration of ammonia (NH₃ and NH₄⁺) whereas no ammonia was found for the other two materials. This means that the urease enzyme remained active after the coating process and caused a rapid hydrolysis of urea after addition of the water. This is surprising because pure urease enzyme is usually highly unstable and should be stored at a low temperature of -20 °C and transported in cooling boxes. During the coating the urease will have experienced a maximum heat exposure of 50-60 °C. It is likely that the short heat exposure of only a few minutes prevented an undesired inactivation of the urease enzyme.

Compared to the leaching test with urease solution (see Table 7), CCG5 showed a higher loss of nitrogen than both materials CG8 (uncoated urea-carbon composite granule used to produce CCG5) and CCG1 (CG8 granule only coated with lauric acid). This can likely be explained by a higher local urease-to-urea ratio due to the application of urease in the coating of the urea granule instead of a uniformly spreading of the urease solution on the model soil. It is also possible that the carbonized material catalyzed the enzymatic hydrolysis by establishing a high surface concentration of both urea and urease and preventing the urease enzyme from washing out. The results show that urease can be used as part of a coating of urea-carbon composite granule to purposely accelerate the hydrolysis of urea. This can be helpful in a case where crops require fast nitrogen supply or under rainy conditions where unhydrolyzed urea is prone to suffer leaching losses.

To test the performance of urea-carbon composite granules on crop growth, a growth trial with potted maize plants was conducted in a greenhouse with artificial light. Bantam maize was pre-grown from seeds in commercial growing media for two weeks before the young plants were transferred to 2L box-shaped pots. Each pot was filled with 1.6 L of a sandy soil that was sourced from agricultural land in the German state of Brandenburg. Fertilizer was applied only in form of urea granules (2-3 mm size) and four different types of urea-carbon composite granules (see Table 9). The number of replicates for the urea control was six and the number of replicates for the urea-carbon composite granules was five each. The urea and composite granules were applied to the growth pots in a soil depth of 4 cm and in contact with two neighbouring walls of the pot to simulate underfoot fertilisation. The amount of urea-nitrogen applied can be found in Table 10.

Full spectrum artificial lighting by metal-halide lamps was used to supplement the naturally low light intensity during Germany's November and December months where the trial was conducted. Supplemental lighting was used for 14 hours per day at an intensity of 11.500 Ix 1 m below the lamps. The growing pots were positioned approximately 2 m below the lamps. The plants were watered at least two times per week.

Table 9 shows the impact of the 4 different urea-carbon composite granules on maize plant growth in comparison to pure urea measured 13 days after transferring the young plants to the growing pots and addition of the urea fertiliser. It was found that all variations of the composite granule increased leaf growth and plant vitality except for the lauric acid coated granule CCG1 where the impact was negative. This can be explained by the delayed release of nitrogen from the coated urea-carbon composite granules due to the shielding effect as observed in the column test (see Table 6), an effect that can be beneficial in commercial applications when a slower release of nitrogen is desired to meet the crops mid or longer term nitrogen demand.

**Table 9: Impact of 4 different urea-carbon composite fertiliser granules and the urea control on maize plant growth and plant vitality in a pot growth trial. Status after 4 weeks since germination and 13 days since fertiliser application.**

| **Tested material** | **Largest leaf maximum width** | **Plant vitality index (SPAD)** |
|---|---|---|
| | mm | |
| CG3 | 24.4 | 41.4 |
| CG8 | 22.8 | 42.0 |
| CG11 | 24 | 40.2 |
| CCG1 | 20.2 | 37.7 |
| Urea (Control) | 21.2 | 38.0 |

Overall, the use of urea-composite fertiliser granules showed benefits over pure urea. This also reflects in the measured nitrogen leaching losses (Table 10) that were determined in a leaching test 21 days after application of the urea fertiliser. Before that day no or insignificant amounts of leachate were formed after watering the maize plants. To gain leachate on day 21 each growth pot was watered with tap water until leachate drained from the bottom of the pot in steps of 200 mL, 100 mL, and 100 mL. The leachate was collected and quantified, and the concentrations of nitrate, nitrite and ammonia (combined NH₃ and NH₄⁺) was determined by means of commercially available water test strips. In some cases the original leachate had to be diluted to obtain a concentration of nitrate and nitrite that was within the measuring range of the test strips. The measurement values were used to calculate the nitrogen losses in percent of the initial urea nitrogen (Table 10).

Table 10 (see attachment) shows the impact of different urea-carbon composite fertiliser granules and the urea control on nitrogen leaching losses of maize growth pots. All values are average values.

The results show that all tested urea-carbon composite granules reduced the nitrogen loss compared to the pure urea control. The leachate of all urea fertiliser variations contained nitrate and nitrite but no ammonia was measured. This can be attributed to the usually high ammonia adsorption capacity of soil and the passing of sufficient time for nitrification of ammonia.

The lowest total nitrogen losses were found for the urea-carbon composite granules that were produced with straw-derived carbonized material (CG8, CG11). The highest loss was observed for the lauric-acid coated composite granule CCG1, which can likely be explained by the previously observed delayed nitrogen release in combination with a lower adsorption capacity due to blockage of pore space of the carbonized material by lauric acid.

It can be concluded from the tests that the urea-carbon fertiliser granules according to the invention with embedded carbonized particulate material effectively enhance the growth of crops and reduce the amount of nitrogen leaching losses. Coating with lauric acid delays the release of nitrogen and additional coating with urease enzyme speeds up the hydrolysis of urea into ammonia. This means that the urea-carbon fertiliser granules can be produced and used to control the release of nitrogen to meet a wide range of commercial demands in crop production.

### Attachment: Tables 2, 4, 5 and 10

**Table 2:**

| Table 2 shows material characteristics of carbonized materials and graphite that can be used to produce the urea-carbon composite granules according to the invention. Measured properties are bulk density, pH and electric conductivity of leachate water (EC), and content of moisture and elemental nitrogen, sulfur and carbon. | | | | | | | | | |
|---|---|---|---|---|---|---|---|---|---|
| **Carbonized** | **Density** | **pH** | **EC** | **moisture** | **ash** | **nitrogen** | **sulfur** | **carbon** | **carbon** |
| **material** | **g/cm³** | | **µS/cm** | **%** | **%dry matter** | %dry matter | %dry matter | %dry matter | %ash-free dry matter |
| CM1 | 0.476 | 7.96 | 57 | 1.3 | 41.4 | 0.60 | 0.04 | 52.55 | 89.71 |
| CM2 | 0.150 | 7.70 | 677 | 1.0 | 9.9 | | | | |
| CM3 | 0.152 | 9.82 | 1059 | 0.0 | 15.3 | | | | |
| CM4 | 0.157 | 9.94 | 1950 | 0.6 | 24.5 | 0.93 | 0.12 | 68.14 | 90.20 |
| CM5 | 0.173 | 10.80 | 2110 | 0.0 | 23.9 | | | | |
| CM6 | 0.315 | 9.90 | 1307 | 0.0 | 16.7 | 0.87 | 70.34 | 70.34 | 84.46 |
| graphite | 0.730 | 8.15 | 53 | 1.2 | 4.2 | | | | |

**Table 4**

| Table 4 shows characteristics of carbon-urea composite granules. | | | | | | |
|---|---|---|---|---|---|---|
| **Composite** | **Carbonized** | **Concentration of carbonized** | **Urea-N concentration** | **Granule weight** | **Granule diameter** | **Granule density** |
| **granule** | **material used** | **material (weight-%)** | **weight-%** | **mg** | **mm** | **g/cm3** |
| CG1 | CM1 | 4.7 | 43.8 | 8.67 | 2.64 | 0.90 |
| CG2 | CM1 | 9.5 | 41.6 | 8.63 | 2.62 | 0.92 |
| CG3 | CM1 | 25.0 | 34.5 | 10.30 | 2.78 | 0.92 |
| CG4 | CM2 | 1.4 | 45.4 | 8.27 | 2.56 | 0.94 |
| CG5 | CM2 | 4.2 | 44.1 | 8.05 | 2.64 | 0.84 |
| CG6 | CM3 | 4.3 | 44.0 | 8.07 | 2.60 | 0.88 |
| CG7 | CM4 | 2.2 | 45.0 | 8.55 | 2.50 | 1.04 |
| CG8 | CM4 | 3.9 | 44.2 | 8.42 | 2.50 | 1.03 |
| CG9 | CM4 | 6.1 | 43.2 | 10.14 | 2.84 | 0.85 |
| CG10 | CM5 | 4.0 | 44.2 | 8.80 | 2.66 | 0.89 |
| CG11 | CM6 | 5.0 | 43.7 | 9.30 | 2.64 | 0.97 |
| CG12 | Graphite | 24.3 | 34.8 | 10.24 | 2.62 | 1.09 |
| CG13 | Graphite | 7.2 | 42.7 | 9.80 | 2.60 | 1.06 |
| | | | | | | |
| Urea | | | 46.0 | 8.14 | 2.32 | 1.25 |

**Table 5:**

| Table 5 shows Characteristics of carbon-urea composite granules with additional coating. | | | | | | | |
|---|---|---|---|---|---|---|---|
| **Coated composite** | **Original** | **Coating** | **Amount of coating** | **Urea-N concentration** | **Granule weight** | **Granule diameter** | **Granule density** |
| **granule** | **granule** | **material** | **weight-%** | **weight-%** | mg | mm | g/cm³ |
| CCG1 | CG8 | Lauric acid | 15 | 37.6 | 8.91 | 2.76 | 0.81 |
| CCG2 | CG5 | Lauric acid | 14 | 37.1 | 8.87 | 2.52 | 1.06 |
| CCG3 | CG10 | Lauric acid | 13 | 38.4 | 10.71 | 2.86 | 0.87 |
| CCG4 | CG1 | Lauric acid | 11 | 38.9 | 8.5 | 2.58 | 0.95 |
| CCG5 | CG8 | Lauric acid and urease | 6% urease, 29% lauric acid | 22.6 | | | |

**Table 10:**

| Table 10 shows the impact of different carbon composite fertiliser granules and the urea control on nitrogen leaching losses of maize growth pots. All values are average values. | | | | | |
|---|---|---|---|---|---|
| **Tested material** | **Starting Urea-N concentration** | **Nitrate-N leaching loss** | **Nitrite-N leaching** loss | **Ammonia-N leaching loss** | **Total-N leaching loss** |
| | mg / L of soil | % of initial urea-N | % of initial urea-N | % of initial urea-N | % of initial urea-N |
| CG3 | 144.0 | 7.78 | 0.28 | 0.0 | 8.06 |
| CG8 | 147.2 | 2.27 | 0.08 | 0.0 | 2.34 |
| CG11 | 145.8 | 2.49 | 0.02 | 0.0 | 2.51 |
| CCG1 | 130.6 | 18.42 | 1.05 | 0.0 | 19.48 |
| Urea (Control) | 143.9 | 43.61 | 1.61 | 0.0 | 45.22 |

### Reference Signs List

- 1: fresh urea granules
- 2: metal dish
- 3: infrared light source
- 4: rotatory shaker
- 5: powdered carbonized material
- 6: portion of dish left blank
- 7: urea-carbon composite granules
- 8: size classification
- 9: embedding into large-sized urea granules
- 10: embedding into medium-sized granules
- 11: embedding into small-sized granules
- 12-14: separation of composite granules with insufficient content of carbonized material
- 15: crop production
- 16: biomass pre-treatment
- 17: biomass carbonization with energy recovery
- 18: milling of carbonized material
- 19: embedding process
- 20: urea production process
- 21: bagging for storage and transport
- 22: soil application
- 23: urea core of urea-carbon composite granule
- 24: layer of carbonized material
- 25: shell of urea
- 26: supply of carbonized material
- 27: supply of urea granules
- 28: discharge of off-size urea granules
- 29: storage of urea-composite granules
- 30: supply of non-agricultural feedstocks such as wood waste, sewage sludge, paper waste and paper processing waste, food waste and food production waste
- 31: extraction of energies and fuels from the biomass carbonization process such as heat, steam, electricity, biooil, hydrogen, carbon monoxide, methane and use of these in urea production and the embedding process

## Claims

1. A urea-carbon composite granule with at least one defined layer of carbonized particulate material directly bound to a urea granule without the aid of any binding material or any binding layer between the urea and the carbonized particulate material.

2. The urea-carbon composite granule according to claim 1, wherein the carbonized particulate material layer is embedded in the urea granule, equidistant or nearly equidistant to the geometric centre of the urea granule and thereby covering the carbonized particulate material layer with a urea layer.

3. The urea-carbon composite granule according to claim 1 or 2, having a diameter of 0.5 to 10 mm.

4. The urea-carbon composite granule according to any of the preceding claims, wherein the layer of carbonized particulate material has a thickness of 1 to 25 % of the diameter of the urea-carbon composite granule.

5. The urea-carbon composite granule according to any of claims 2 to 4 wherein the thickness of the urea layer covering the defined layer of carbonized particulate material is at least 1 µm.

6. The urea-carbon composite granule according to any of the preceding claims wherein the carbonized particulate material has a mass fraction of the total mass of the urea-carbon composite granule of 0.5 % to 25 %.

7. The urea-carbon composite granule according to any of the preceding claims wherein the ratio between the average diameter of the carbonized particulate material and the diameter of the urea-carbon composite granule is less than 1:10, or wherein the ratio between the average diameter of the carbonized particulate material and the diameter of the urea-carbon composite granule is less than 1:30.

8. The urea-carbon composite granule according to any of the preceding claims wherein the concentration of carbonized particulate material in the layer of carbonized particulate material makes at least 50 % of the total mass of said layer of carbonized particulate material,
or wherein the concentration of carbonized particulate material in the layer of carbonized particulate material makes at least 80 % of the total mass of said layer of carbonized particulate material,
or wherein the concentration of carbonized particulate material in the layer of carbonized particulate material makes at least 95 % of the total mass of said layer of carbonized particulate material.

9. The urea-carbon composite granule according to any of the preceding claims wherein the carbonized particulate material is selected from charcoal, biochar, carbon black and graphite, and the mixtures thereof.

10. The urea-carbon composite granule according to any of the preceding claims that contains an additional outer coating of a highly hydrophobic material and/or an urease enzyme.

11. The urea-carbon composite granule according to claim 10 wherein the hydrophobic material is lauric acid.

12. The urea-carbon composite granule according to any of the preceding claims that contains two or more layers of carbonized particulate material and where the innermost layer contains the carbonized particulate material with the highest porosity and the outermost layer contains the carbonized particulate material with the highest hydrophobicity, when comparing the characteristics of the layers of carbonized particulate material.

13. A method of manufacturing the urea-carbon composite granule according to any of the preceding claims 2 to 12 wherein the following steps are performed successively:
a) providing granular urea and carbonized particulate material,
b) spreading said carbonized particulate material on a surface carrier of high reflectance and heat conductivity,
c) moving said granular urea on top of the carbonized particulate material,
d) heating the mixture of said granular urea and said carbonized particulate material from the top and thereby heating said carbonized particulate material faster than said granular urea and said carrier until the temperature of the heated carbonized particulate material reaches between 133 °C and 180 °C,
e) thereby initializing a heat transfer from the heated carbonized particulate material to the surface of the granular urea to cause temporary and locally limited melting of the granular urea and subsequent embedding of the carbonized particles, and
d) optionally coating the prepared urea-carbon composite granule with one or more further coating materials.

14. The method according to claim 13 wherein infrared light or microwave rays are used for the selective heating and/or wherein the embedding process is conducted on a metal surface of high reflectance and heat conductivity.

15. Fertilizer comprising the urea-carbon composite granules according to any of claims 1 to 12.
